# EUROPEAN PATENT APPLICATION

(11) **EP 4 715 711 A1**
(43) Date of publication of application: **25.03.2026**
(21) Application number: 24201757.2
(22) Date of filing: 20.09.2024
(51) Int. Cl.: G06Q 20/10, G06Q 20/32, G06Q 20/36, G06Q 20/38, G07F 19/00

(54) **COMPUTING DEVICES FOR IMPROVED CASH WITHDRAWAL**

(71) Applicant: Mastercard International Incorporated, Purchase, NY 10577 (US)
(72) Inventor: SINTON, James David, Leigh-On-Sea, SS9 1JU (GB); BERIC, John, London, NW11 8NH (GB); Tierney, John, Merseyside, CH60 7TF (GB)
(74) Representative: Keltie LLP

(57) **Abstract**

There is provided a mobile computing device for enabling a user to withdraw cash at a cash withdrawal device, the mobile computing device comprising: user input means for enabling the user to provide user input to the mobile computing device; a digital wallet comprising a tokenised payment application and an additional data extension; wherein the digital wallet is configured to generate a cash withdrawal request comprising cash withdrawal data based on the user input; wherein the tokenised payment application is configured to communicate with the cash withdrawal device to authenticate the cash withdrawal request; and wherein the additional data extension is configured to send the cash withdrawal data to the cash withdrawal device; wherein an issuer authorisation request can be generated for approval by an issuer associated with the user based on the cash withdrawal request, and wherein the cash withdrawal device is instructed to dispense cash based on approval of the issuer authorisation request. According to a second aspect of the present disclosure, there is provided a cash withdrawal device for enabling a user to withdraw cash using a mobile computing device.

## Description

### TECHNICAL FIELD

The present disclosure relates to computing devices for improved cash withdrawal. In particular, the present disclosure relates to computing devices for enabling a user to withdraw cash at a cash withdrawal device.

### BACKGROUND

A cash withdrawal device, such as an ATM, can be used to withdraw cash from a cardholder's payment account. Typically, the cardholder inserts their debit or credit card into the card slot on the ATM and enters the PIN associated with the card at a keypad on the ATM when prompted. After entering the PIN, the ATM provides the option to withdraw cash. The cardholder indicates that they would like to withdraw cash by pressing the corresponding action button on the ATM. The ATM requests the cardholder to enter the amount they wish to withdraw and the cardholder inputs the amount using the keypad. The ATM then dispenses the cash and the cardholder walks away with the cash along with their card.

Alternatively, a contactless-enabled ATM can be used to withdraw cash without needing to insert a physical debit or credit card. In this case, the contactless-enabled ATM can interact with a payment card or an NFC-enabled mobile device over the contactless interface of the ATM. For example, the cardholder can use a banking application on an NFC-enabled smartphone to withdraw cash from the contactless-ATM. The cardholder opens the banking application and selects the option for cardless cash withdrawal. The cardholder taps the phone against a contactless reader on the ATM. The ATM responds in the same way as if a debit or credit card had been inserted. When prompted by the ATM, the cardholder enters their PIN using the ATM keypad to verify their identity and authorise the transaction. The cardholder then enters the amount of cash they would like to withdraw using the ATM keypad. The ATM then dispenses the cash and the cardholder walks away with the cash along with their phone.

There are several technical limitations associated with current methods of withdrawing cash from an ATM:
- The cardholder is required to enter a payment card and/or PIN at the ATM which opens up opportunities for fraudsters to steal payment card details, the physical payment card itself as well as the associated PIN.
- Abundant contact with surfaces at the ATM using the keypad and ATM action buttons or touchscreen interface increases risk of contracting viruses and bacteria.
- Complicated ATMs with many built-in hardware features required.
- ATMs may struggle to read debit or credit cards due to wear and tear or debris accumulation in the card reader, leading to transaction failures.
- ATMs with touchscreen interfaces may freeze or become unresponsive, preventing customers from completing their transactions.
- Security issues can also interfere with cash withdrawals, such as fraudsters attaching skimming devices to ATMs to steal card information, which can lead to unauthorised withdrawals or account freezes.
- A further problem is that some ATMs may not be compatible with certain cards or networks, resulting in failed withdrawal attempts for customers using these cards.

The present disclosure has been devised to mitigate or overcome at least some of the above-mentioned problems.

### SUMMARY OF THE DISCLOSURE

According to a first aspect of the present disclosure, there is provided a mobile computing device for enabling a user to withdraw cash at a cash withdrawal device, the mobile computing device comprising: user input means for enabling the user to provide user input to the mobile computing device; a digital wallet comprising a tokenised payment application and an additional data extension; wherein the digital wallet is configured to generate a cash withdrawal request comprising cash withdrawal data based on the user input; wherein the tokenised payment application is configured to communicate with the cash withdrawal device to authenticate the cash withdrawal request; and wherein the additional data extension is configured to send the cash withdrawal data to the cash withdrawal device; wherein an issuer authorisation request can be generated for approval by an issuer associated with the user based on the cash withdrawal request, and wherein the cash withdrawal device is instructed to dispense cash based on approval of the issuer authorisation request.

The present disclosure provides technical advantages beyond the state of the art. Firstly, the present disclosure avoids any need for the cardholder to provide input at the cash withdrawal device, such as a physical payment card, cash withdrawal amount or a verification method such as a PIN. This means that the cardholder is required to spend less time at the cash withdrawal device and is not required to expose a physical payment card including any payment account details thereon or a PIN in public. Embodiments of the present disclosure enable cardholders to authenticate transactions directly on their mobile device, rather than having to enter a PIN at the cash withdrawal device. This helps to prevent fraud by ensuring cardholder verification assets are adequately secured and protected from manipulation and exploitation. Embodiments of the present disclosure therefore enhance the security for the cardholder when withdrawing cash from a cash withdrawal device. Embodiments of the present disclosure also are not affected by wear and tear on debit or credit cards, or debris accumulation in the card reader, thereby resulting in fewer transaction failures.

The user input means may comprise a user interface, such as a keypad and/or a touchscreen interface. The user input means may comprise a microphone for enabling the user to provide voice input.

The additional data extension may be configured to send the cash withdrawal data to an additional data kernel extension at the cash withdrawal device.

The tokenised payment application may be configured to communicate with a contactless kernel at the cash withdrawal device to authenticate the cash withdrawal request.

The tokenised payment application, in communication with the contactless kernel at the cash withdrawal device, may be configured to perform authentication of the cash withdrawal request to verify the identity of the user and to validate the mobile computing device.

The authentication of the cash withdrawal request may comprise, for example, a CDCVM-based transaction.

The cash withdrawal data may comprise issuer approval of the issuer authorisation request. Advantageously, this enables issuer approval to be obtained before the user approaches the cash withdrawal device.

The issuer authorisation request may comprise a timestamp, and a tokenised issuer approval response may be generated including the timestamp based on approval of the issuer authorisation request.

The digital wallet may be configured to store an issuer approval in a secure location, and the issuer approval may comprise the tokenised issuer approval response. According to a second aspect of the present disclosure, there is provided a cash withdrawal device for enabling a user to withdraw cash using a mobile computing device, the computing device comprising: a cash withdrawal device reader, wherein the cash withdrawal device reader comprises: a contactless kernel configured to communicate with a tokenised payment application in a digital wallet of the mobile computing device to authenticate a cash withdrawal request comprising cash withdrawal data and to generate transaction data; an additional data kernel extension configured to communicate with an additional data extension in the digital wallet to receive the cash withdrawal data; a cash withdrawal device processor for communicating with an acquirer associated with the computing device; wherein an issuer authorisation request can be generated for approval by an issuer associated with the user based on the cash withdrawal request, and wherein the cash withdrawal device is instructed to dispense cash based on approval of the issuer authorisation request.

Advantageously, embodiments of the present disclosure enable the design of the cash withdrawal device to be simplified and built-in hardware features minimised. In addition, the present disclosure results in the cardholder having less contact with surfaces at the cash withdrawal device, thereby reducing the risk of contracting viruses and bacteria.

The term 'cash withdrawal device' may be used synonymously with the term 'cash withdrawal computing device'.

The cash withdrawal device processor may be configured to generate the issuer authorisation request based on the cash withdrawal data and the transaction data.

The cash withdrawal device processor may be configured to collate the cash withdrawal data and the transaction data to generate the issuer authorisation request.

The cash withdrawal device processor may be configured to send the issuer authorisation request to the issuer via the acquirer and a payment network.

The cash withdrawal device processor may be configured to send the issuer authorisation request to the issuer via the acquirer.

The cash withdrawal data may comprise issuer approval of the issuer authorisation request.

The issuer approval may comprise a tokenised issuer approval response.

The additional data kernel extension may be configured to receive and validate the tokenised issuer approval response.

The contactless kernel at the cash withdrawal device, in communication with the tokenised payment application in the digital wallet of the mobile computing device, may be configured to perform authentication of the cash withdrawal request to verify the identity of the user and to validate the mobile computing device.

The authentication of the cash withdrawal request may comprise, for example, a CDCVM-based transaction.

Within the scope of this application, it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the disclosure will now be described, by way of example only, with reference to the accompanying drawings, in which:
Figure 1 is a schematic diagram showing cash withdrawal at an ATM, in accordance with embodiments of the present disclosure; and
Figure 2 is a schematic diagram showing components of a mobile device and an ATM, in accordance with a first embodiment of the present disclosure;
Figure 3 is a sequence diagram showing the process of withdrawing cash from an ATM, in accordance with a first embodiment of the present disclosure;
Figure 4 is a sequence diagram showing the process of authorising a cash withdrawal request as an 'off-us' transaction, in accordance with the first embodiment of the present disclosure;
Figure 5 is a sequence diagram showing the process of authorising a cash withdrawal request as an 'on-us' transaction, in accordance with the first embodiment of the present disclosure;
Figure 6 is a schematic diagram showing components of a mobile device and an ATM, in accordance with a second embodiment of the present disclosure;
Figure 7 is a sequence diagram showing the process of withdrawing cash from an ATM, in accordance with the second embodiment of the present disclosure;
Figure 8 is a schematic diagram showing the hardware architecture of a mobile device suitable for implementing embodiments of the present disclosure;
Figure 9 is a schematic diagram showing the software architecture of a mobile device suitable for implementing embodiments of the present disclosure; and
Figure 10 is a schematic diagram showing a typical four-party model used in payment interactions between entities operating in a card scheme.

### DETAILED DESCRIPTION

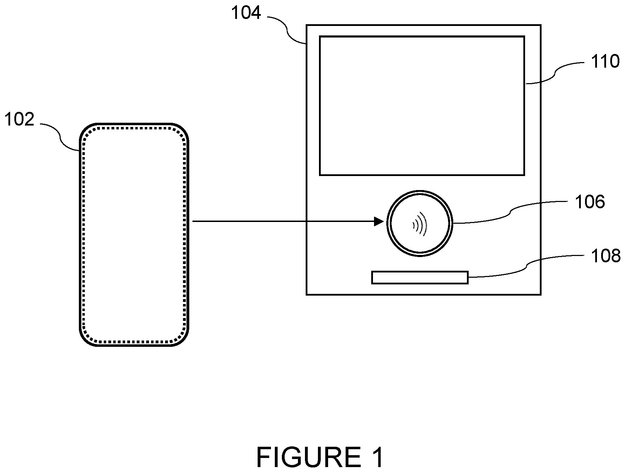

General and specific embodiments of the present disclosure are described below with reference to Figures 1 to 10.

The present disclosure relates to a mobile computing device for enabling a user to withdraw cash at a cash withdrawal device, and a cash withdrawal device for enabling a user to withdraw cash using a mobile computing device.

Embodiments of the present disclosure may be used for enabling a payment cardholder to withdraw cash at an ATM 104 using a mobile device 102, as shown in Figure 1. An ATM is a non-limiting example of a cash withdrawal device. A non-limiting example of a mobile device is a smartphone. The ATM 104 comprises an ATM reader 106 and a cash dispensing slot 108. The ATM 104 may comprise a screen 110 for displaying information to the user. The user journey in withdrawing cash from an ATM 104, in accordance with embodiments of the present disclosure, involves the user opening and authenticating themselves to a banking application on a mobile device 102, selecting an option within the banking application to withdraw cash, entering an amount to be withdrawn at the mobile device interface, and then tapping the mobile device 102 on the ATM reader 106. Following a successful authorisation response, the ATM 104 dispenses the requested amount for the user to collect via the cash dispensing slot 108. As such, the cash withdrawal process is simplified significantly.

The present disclosure provides technical advantages beyond the state of the art. Firstly, the present disclosure avoids any need for the cardholder to provide input at the ATM, such as a physical payment card, cash withdrawal amount or a verification method such as a PIN. This means that the cardholder is required to spend less time at the ATM and is not required to expose a physical payment card including any payment account details thereon or a PIN in public. Embodiments of the present disclosure enable cardholders to authenticate transactions directly on their mobile device, rather than having to enter a PIN at the ATM. This helps to prevent fraud by ensuring cardholder verification assets are adequately secured and protected from manipulation and exploitation. Embodiments of the present disclosure therefore enhance the security for the cardholder when withdrawing cash from an ATM. Furthermore, the cash withdrawal process is more streamlined, convenient and accessible since the cardholder can simply use a banking application on a mobile device to request cash withdrawal and can view exactly how much is available via the banking application. Embodiments of the present disclosure also are not affected by wear and tear on debit or credit cards, or debris accumulation in the card reader, thereby resulting in fewer transaction failures.

A further advantage is that the present disclosure requires the ATM to include a contactless reader and a cash dispensing slot at a minimum, which enables the design of ATMs to be simplified and built-in hardware features minimised. In addition, the present disclosure results in the cardholder having less contact with surfaces at the ATM, such as at the ATM keypad, ATM action buttons or touchscreen interface, thereby reducing the risk of contracting viruses and bacteria. Furthermore, embodiments of the present disclosure eliminate the issue with touchscreen interfaces at ATMs freezing or become unresponsive.

A further advantage is that embodiments of the present disclosure support solutions in digital-first banking and digital-only banking. In addition, additional data including identifiers and ATM locators could be used to analyse and provide direction for cross border transactions. For example, the additional data could be used to negotiate preferential cross border fees between financial institutions: e.g. UK issuing bank A could agree with US ATM acquirer B that if cardholder is directed to the US ATM acquirer B's ATM then a lower cash handling fee could be applied.

### FIRST EMBODIMENT OF THE PRESENT DISCLOSURE

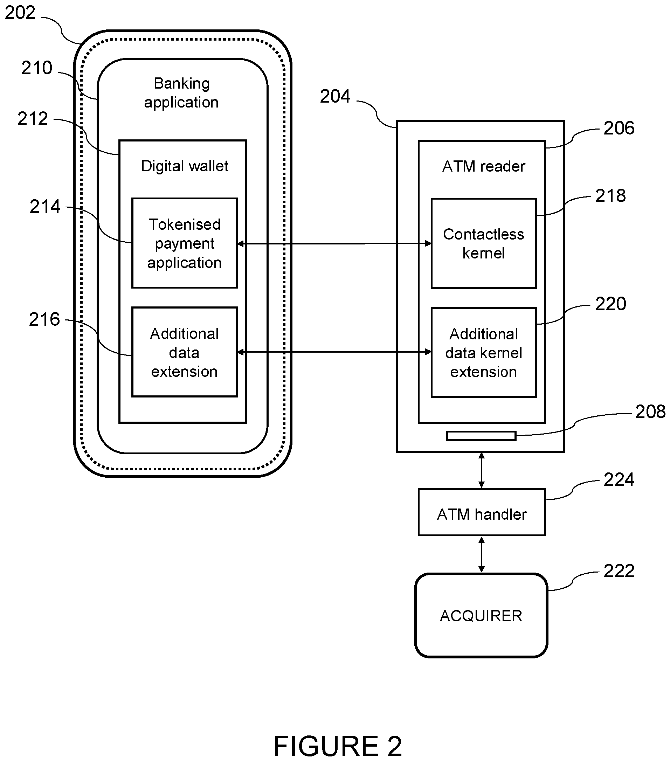

Components of a mobile device 202 and an ATM 204 are shown in Figure 2, in accordance with a first embodiment of the present disclosure.

The mobile device 202 is NFC-enabled and comprises a banking application 210. The banking application 210 comprises a digital wallet 212. The digital wallet 212 comprises contactless digital wallet functionality such as host card emulation (e.g. MCBP). The digital wallet 212 comprises a tokenised payment application 214 (e.g. Cirrus or Debit Mastercard). The digital wallet 212 comprises an additional data extension 216. In alternative embodiments, the banking application 210 may comprise the additional data extension 216.

The ATM 204 comprises an ATM reader 206 and a cash dispensing slot 208. The ATM reader 206 comprises a contactless kernel 218, for example a C-2 kernel or a C-8 kernel, and an additional data kernel extension 220. An acquirer 222 associated with the ATM 204 can provide instruction to the ATM 204. Optionally, the ATM 204 may interact with an ATM handler 224. The ATM handler 224 comprises third party software which interacts with the ATM 204 to provide instruction from the acquirer 222. ATMs can have different operating systems and the ATM handler 224 acts a go-between such that the acquirer 222 has to develop only one communication protocol with the ATM handler 224 and the ATM handler 224 then instructs the ATM 204. The ATM handler 224 typically sits at a third party processor. The ATM handler 224 is in communication with an acquirer 222 associated with the ATM2 204, whereby the ATM handler 224 is configured to provide translation and/or instruction of messages between the ATM 204 and the acquirer 222. If an ATM handler 224 is not used, the ATM 204 is in direct communication with the acquirer 222.

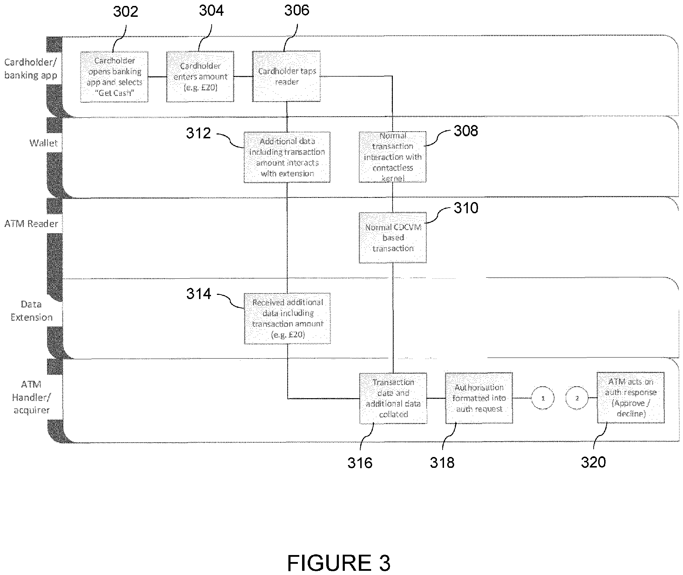

A process of withdrawing cash from an ATM is shown in Figure 3, in accordance with the first embodiment of the present disclosure. The functionality of the components of the mobile device 202 and the ATM 204 will now be described with reference to Figure 3.

Starting at the banking application on the mobile device, the cardholder opens, at Step 302, the banking application, authenticates themselves and selects an option to get cash. The cardholder then enters, at Step 304, the amount to be withdrawn, e.g. £20. The amount may be entered using a touchscreen interface of the mobile device, or alternative input methods, such as voice interaction. The cardholder then taps, at Step 306, the mobile device onto the ATM reader. The interaction between the mobile device and the ATM reader triggers two processes to run in parallel: (i) interaction between the tokenised payment application in the digital wallet on the mobile device and the contactless kernel on the ATM reader; and (ii) interaction between the additional data extension in the digital wallet and the additional data kernel extension on the ATM reader. Starting with the interaction between the tokenised payment application in the digital wallet and the contactless kernel on the ATM reader, the contactless kernel exchanges, at Step 308, command application protocol data units (APDUs) with the digital wallet and receives responses from the mobile device via the contactless interface. At the ATM reader, a CDCVM-based transaction is performed, at Step 310. The CDCVM-based transaction comprises APDUs covering application selection, reading of data from the mobile device, performing offline data authentication and retrieving an application cryptogram and associated data that enables the issuer or their processor to validate the transaction as having been performed by a genuine device and that the consumer successfully authenticated themselves. The transaction data from the CDCVM transaction is transmitted to the ATM handler. In parallel, additional data, including the transaction amount, is obtained, at Step 312, by the additional data extension in the digital wallet and passed, at Step 314, from the digital wallet to the additional data kernel extension in the ATM reader. The additional data is sent to the additional data kernel extension after offline data authentication (ODA) takes place, for example, using CDA to verify that a genuine token is being presented to the reader. The additional data may be sent while the interaction with the tokenised payment application is taking place.

The additional data comprises the amount of cash required in the cash withdrawal request (e.g. £20). Optionally, the additional data may comprise a currency code indicating the currency of the amount required. Optionally, the additional data may comprise an issuer identifier to enable the ATM to act according to an issuer or acquirer agreement (on-us/off-us transactions as described in further detail below). Optionally, the additional data may comprise an indication of the country in which the cash withdrawal is taking place. The additional data is then transmitted to the ATM handler. To enhance security, the additional data kernel extension at the ATM may only accept data from the digital wallet if CDA (Combined Data Authentication) has been successful to indicate that a genuine digital card has been tapped at the ATM reader.

Next, the ATM handler collates, at Step 316, the transaction data and the additional data and sends the collated data to the ATM acquirer. In embodiments in which no ATM handler is used, the ATM sends the transaction data and the additional data directly to the ATM acquirer. The ATM acquirer then generates, at Step 318, an authorisation request based on the collated data. The authorisation request comprises a request for approval of the cash withdrawal and the amount to be withdrawn, whereby the request is to be approved by the issuer associated with the cardholder. The authorisation request can be processed as an 'off-us' transaction, where the transaction utilises a payment scheme network, or an 'on-us' transaction, where the transaction utilises direct interaction with the issuer outside of a payment scheme network. 'Off-us' and 'on-us' transactions are discussed in further detail below. Once the authorisation request has been processed, the ATM handler receives an authorisation response from the acquirer which indicates whether the authorisation request has been approved or declined. The ATM handler instructs the ATM to act on the authorisation response. The ATM then acts, at Step 320, on the authorisation response. If the authorisation response indicates that the authorisation request has been approved, then the ATM dispenses cash according to the amount specified in the cash withdrawal request via the cash dispensing slot 208. In embodiments in which no ATM handler is used, the ATM receives the authorisation response directly from the acquirer.

### OFF-US ATM EXTENSION IN ACCORDANCE WITH THE FIRST EMBODIMENT OF THE PRESENT DISCLOSURE

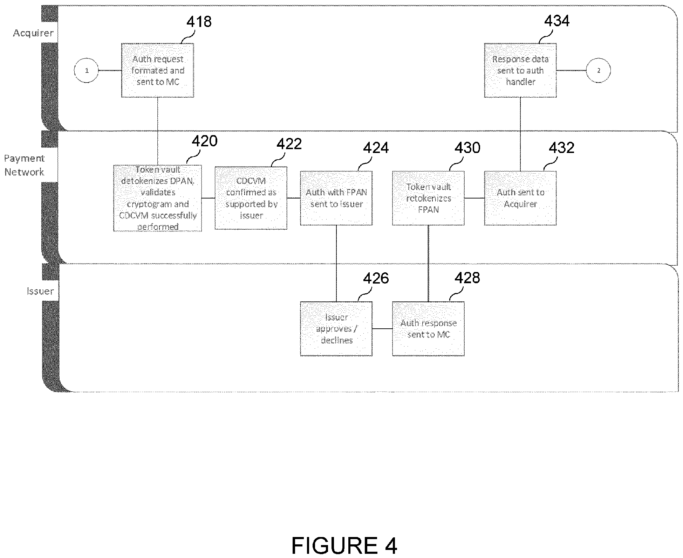

Processing of the authorisation request as an 'off-us' transaction will now be described in further detail with reference to Figure 4. In an 'off-us' transaction, the acquirer is in communication with the issuer via a payment network, and the authorisation request is sent from the acquirer to the payment network for processing before the request is sent to the issuer for approval.

Firstly, the acquirer generates, at Step 418, the authorisation request and sends the authorisation request to a payment network. The payment network comprises a token vault for performing tokenization mapping to detokenize the DPAN to reveal the FPAN, and to retokenize the FPAN to form the DPAN. For example, the Mastercard network comprises Mastercard Digital Enablement Service (MDES). The token vault detokenizes, at Step 420, the DPAN to reveal the FPAN and validates a cryptogram, which enables a check to be performed to confirm that CDCVM was performed successfully. The issuer provides, at Step 422, a response which confirms that: (a) it will authorise the ATM transaction based on the validated use of CDCVM; or (b) it will require the use of a PIN in order to approve the transaction; or (c) it is declining the transaction regardless. Next, the payment network sends, at Step 424, the authorisation request, now comprising the FPAN, to the issuer. The issuer approves or declines, at Step 426, the authorisation request and sends, at Step 428, an authorisation response to the payment network. The authorisation response comprises authorisation response data which indicates whether the authorisation request has been approved or declined. The token vault retokenizes, at Step 430, the FPAN to form the DPAN. The payment network sends, at Step 432, the authorisation response to the acquirer. The acquirer then sends, at Step 434, the authorisation response data to the ATM handler. The ATM handler instructs the ATM to act on the authorisation response. The issuer response may include instruction to the ATM to request a PIN to be entered, even if CDCVM was successfully performed by the cardholder and validated by the issuer or its processor or the token vault.

### ON-US ATM EXTENSION IN ACCORDANCE WITH THE FIRST EMBODIMENT OF THE PRESENT DISCLOSURE

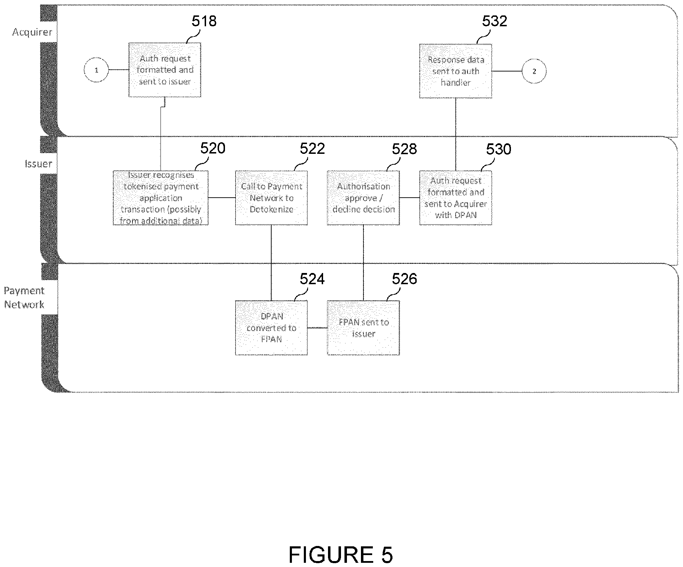

Processing of the authorisation request as an 'on-us' transaction will now be described in further detail with reference to Figure 5. In an 'on-us' transaction, the acquirer is in direct communication with the issuer, and the issuer is in communication with the payment network. The authorisation request is sent from the acquirer to the issuer for processing, and the payment network is utilised for detokenization.

Firstly, the acquirer generates, at Step 518, the authorisation request and sends the authorisation request to the issuer. The issuer recognises, at Step 520, a tokenised payment application transaction and calls, at Step 522, to the payment network to detokenize the DPAN to the FPAN. The payment network converts, at Step 524, the DPAN to the FPAN, and sends, at Step 526, the FPAN to the issuer. The payment network may optionally validate the cryptogram and use this validation and the data associated with the cryptogram to check whether CDCVM was successfully performed; alternatively one, or both, of these checks may be performed by the issuer or their processor. The issuer approves or declines, at Step 528, the authorisation request and generates, at Step 530, an authorisation response. The issuer sends the authorisation response and the DPAN to the acquirer. The authorisation response comprises authorisation response data which indicates whether the authorisation request has been approved or declined. The acquirer sends, at Step 532, the authorisation response data to the ATM handler. The ATM handler then instructs the ATM to act on the authorisation response.

### SECOND EMBODIMENT OF THE PRESENT DISCLOSURE

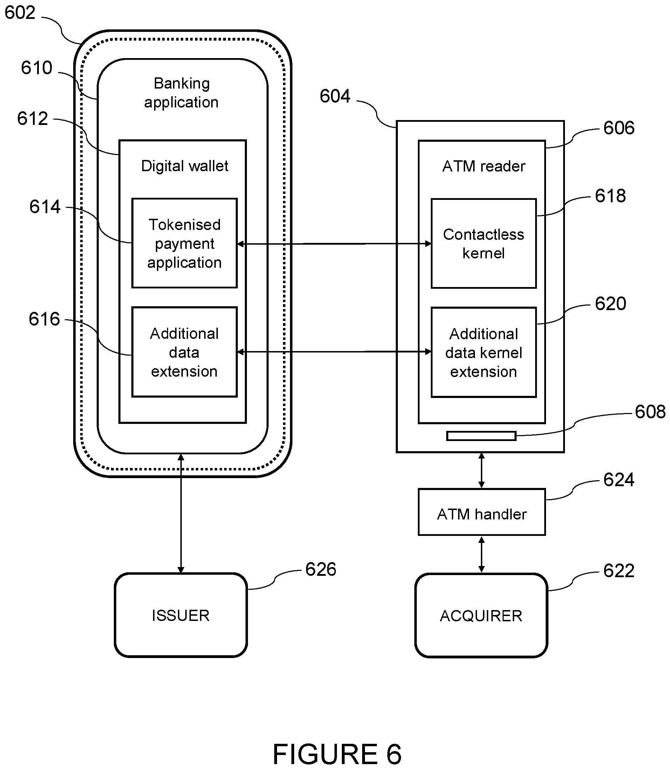

Components of a mobile device 602 and an ATM 604 are shown in Figure 6, in accordance with a second embodiment of the present disclosure.

The mobile device 602 is NFC-enabled and comprises a banking application 610. The banking application 610 comprises a digital wallet 612. The digital wallet 612 comprises contactless digital wallet functionality such as host card emulation (e.g. MCBP). The digital wallet 612 comprises a tokenised payment application 614 (e.g. Cirrus or Debit Mastercard). The digital wallet 612 comprises an additional data extension 616. In alternative embodiments, the banking application 610 may comprise the additional data extension 616. The mobile device 602 is in communication with the issuer 626 associated with the cardholder via the banking application 610.

The ATM 604 comprises an ATM reader 606. The ATM reader 606 comprises a contactless kernel 618, for example a C-2 kernel or a C-8 kernel, and an additional data kernel extension 610. The acquirer 622 can provide instruction to the ATM 604. Optionally, the ATM 604 may interact with an ATM handler 624. The ATM handler 624 comprises third party software which interacts with the ATM 604 to provide instruction from the acquirer 622. ATMs can have different operating systems and the ATM handler 624 acts a go-between such that the acquirer 622 has to develop only one communication protocol with the ATM handler 624 and the ATM handler 624 then instructs the ATM 604. The ATM handler 624 typically sits at a third party processor. The ATM handler 624 may be configured to provide translation and/or instruction of messages between the ATM 604 and the acquirer 622.

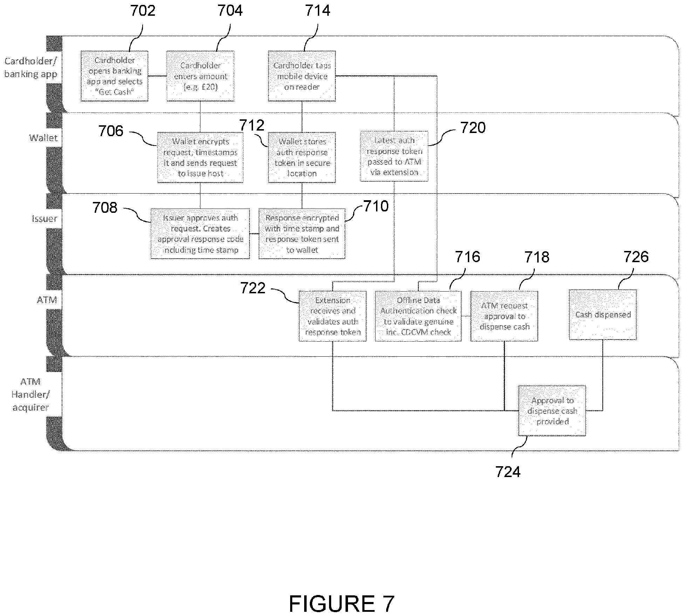

A process of withdrawing cash from an ATM is shown in Figure 7, in accordance with the second embodiment of the present disclosure. The functionality of the components of the mobile device 602 and the ATM 604 will now be described with reference to Figure 7.

Prior to the cardholder requesting a cash withdrawal, the issuer and the acquirer share encryption keys once. The cardholder opens, at Step 702, the banking application on the mobile device 602 and selects an option to get cash. The cardholder then enters, at Step 704, the amount to be withdrawn, e.g. £20, as a cash withdrawal request. Next, the digital wallet encrypts, at Step 706, the cash withdrawal request. In the present embodiment, symmetric cryptography is used as the method of encryption. In alternative embodiments, public key cryptography (also known as asymmetric cryptography) may be used as the method of encryption. In embodiments using symmetric keys, the keys can be agreed and shared pairwise between each issuer and acquirer participating. In embodiments using asymmetric keys, the keys can be efficiently used via a Public Key Hierarchy (PKI) architecture, whereby each issuer and acquirer trust a Certification Authority (CA) such as a payment scheme. The digital wallet adds a timestamp to the cash withdrawal request. The digital wallet then sends the cash withdrawal request as an authorisation request to the issuer associated with the cardholder. The authorisation request comprises a request for approval of the cash withdrawal, the amount to be withdrawn, a timestamp, and a DPAN. The issuer approves, at Step 708, the authorisation request. After approving the authorisation request, the issuer creates an authorisation response code, which indicates that the authorisation request has been approved. The authorisation response code comprises a timestamp. The issuer encrypts, at Step 710, the authorisation response code and creates an authorisation response cryptogram using the shared key which is part of the authorisation response. The authorisation response cryptogram may also be referred to as the authorisation response token. Input data for the authorisation response cryptogram comprises a timestamp, the DPAN, the amount requested and an authorisation code. The authorisation response cryptogram input data may comprise an ATM ID or location information for validating the location of the mobile device and ATM for the purpose of restricting ATM usage to ATMs in the vicinity of the cardholder. The issuer then sends the authorisation response cryptogram to the digital wallet.

The digital wallet stores, at Step 712, the authorisation response cryptogram in a secure location, namely within the mobile payment application, e.g. the mobile banking application. In the event that the issuer declines the authorisation request, no authorisation response cryptogram is provided. In embodiments using asymmetric cryptography, the issuer uses its Private Key to create an authorisation response digital signature over the relevant input data.

The cardholder receives confirmation on the banking application that the withdrawal request has been approved and is instructed to proceed to the ATM. Next, the cardholder taps, at Step 714, the mobile device onto the ATM reader. The interaction between the mobile device and the ATM reader triggers two processes to run in parallel: (i) interaction between the tokenised payment application in the digital wallet on the mobile device and the contactless kernel on the ATM reader; and (ii) interaction between the additional data extension in the digital wallet and the additional data kernel extension on the ATM reader. Starting with the interaction between the tokenised payment application in the digital wallet on the mobile device and the contactless kernel on the ATM reader, offline data authentication (for example, combined dynamic data authentication (CDA)), is performed, at Step 716, to verify the authenticity of the payment card and the transaction. This includes a consumer device cardholder verification method (CDCVM) check. The transaction data from the CDA is transmitted to the ATM handler. The ATM then sends, at Step 718, a request for approval to dispense the cash to the ATM handler.

In parallel, the authorisation response cryptogram is passed, at Step 720, from the additional data extension in the digital wallet to the additional data kernel extension in the ATM reader. The additional data kernel extension in the ATM reader receives and validates, at Step 722, the authorisation response cryptogram. The ATM sends the authorisation response cryptogram and approval request to the acquirer, via the ATM handler.

The acquirer validates the authorisation response cryptogram using the shared key, validates that the timestamp included in the authorisation response cryptogram is within the expected range, and validates that the DPAN included in the authorisation response cryptogram input data corresponds with the DPAN provided to the ATM reader via the contactless kernel. Optionally, the authorisation response cryptogram input data may comprise a time limit for allowing the authorisation response cryptogram to be used for a certain time period only before it expires. Optionally, the authorisation response cryptogram input data may comprise an ATM ID for validating the location of the ATM. In alternative embodiments, shared keys may be loaded onto the ATM, which removes the needs to send the authorisation response cryptogram to the acquirer. In embodiments using asymmetric cryptography, the issuer will also provide its Public Key certificate in the authorisation response. The acquirer or ATM validates the Issuer Public Key certificate using the trusted Certification Authority Public Key and then uses the Issuer Public Key to validate the authorisation response signature.

The acquirer provides, at Step 724, an approval message to dispense the cash, based on the authorisation response cryptogram (or signature) and associated data and the approval request. The acquirer sends the approval message to the ATM, via the ATM handler. The ATM receives the approval message and acts on the approval message by dispensing, at Step 726, cash according to the amount specified in the cash withdrawal request. If an ATM handler is not used, the ATM is in direct communication with the acquirer: the ATM sends the authorisation response cryptogram and approval request directly to the acquirer, and the acquirer sends the approval message directly to the ATM.

In embodiments, a replay mitigation feature may be included. The additional data transmitted from the additional data extension in the digital wallet to the additional data kernel extension in the ATM reader may comprise an application transaction counter (ATC). The ATC is provided by the mobile device in the response to a GENERATE AC command sent by the contactless kernel during the contactless transaction to ensure that the data is not being replayed. The ATC comparison may be performed at the ATM or the ATM handler. An alternative replay mitigation feature may be used. For example, a sequence number created by the mobile device or the issuer may be included in the additional data transmitted from the additional data extension in the digital wallet to the additional data kernel extension in the ATM reader instead of the ATC. In this case, the device or issuer includes an ATM ID representing the ATM at which the cardholder is allowed to transact. The ATM or ATM handler checks whether the ATM ID matches the ATM ID of the ATM at which the transaction is taking place and that the sequence number is unique and has not previously presented to the ATM. If the ATM ID does not match then the ATM does not continue with the transaction and if the ATM ID does match but the sequence number is not unique (for example for all authorisation responses ever received for that DPAN at that ATM, potentially within a defined timeframe) then the ATM does not continue with the transaction.

In embodiments, cash withdrawal may be performed without the need for the consumer to have a payment card associated with their bank account. In such embodiments, the consumer's bank account details are mapped to a virtual FPAN which is then tokenised to enable a tokenised card payment to be performed.

### HARDWARE ARCHITECTURE OF MOBILE COMPUTING DEVICE

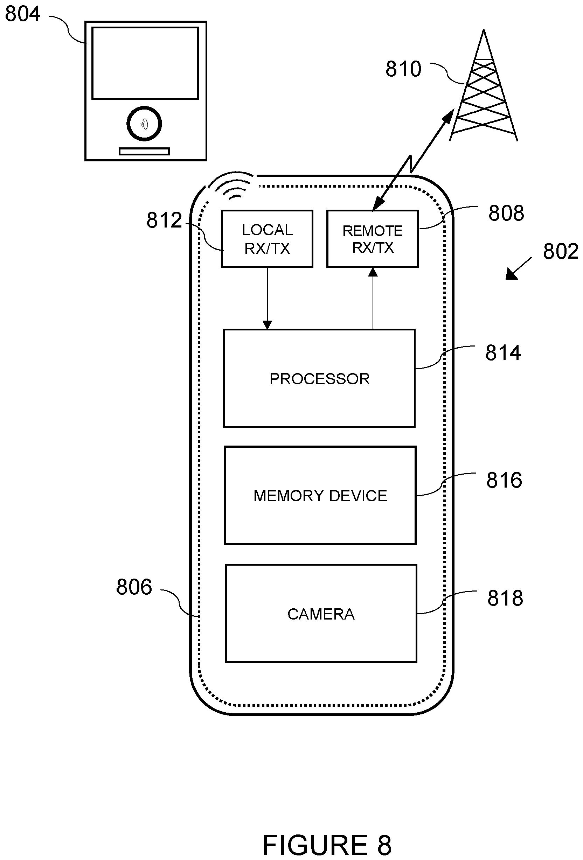

Figure 8 shows the hardware architecture of a smartphone 802 which is suitable for use with embodiments of the present disclosure. The term 'smartphone' may be used synonymously herein with 'mobile cellular telecommunications handset' or 'mobile phone' or 'mobile device'. Other mobile computing devices may be used instead of the smartphone 802. The mobile computing device may be another type of computing device such as a tablet or a laptop computer. The mobile computing device need not have cellular telecommunications capabilities (so long as some form of data connection, such as a Wi-Fi or Ethernet connection, is available).

In general, mobile computing devices comprising the hardware elements shown in the smartphone 802 of Figure 8 are suitable for use with embodiments of the present disclosure.

The smartphone 802 has a display 806 providing, in this example, a touchscreen user interface. The smartphone 802 is equipped with a remote wireless telecommunications apparatus comprising a remote transmitter/receiver 808 for communication with a wireless telecommunications network 810. The smartphone 802 is also equipped with a local wireless telecommunications apparatus comprising a local transmitter/receiver 812 for communication with a local transaction device such as an ATM 804. For example, the local transmitter/receiver 812 may comprise an NFC receiver to enable the smartphone 802 to receive data from an ATM 804 which is capable of transmitting data via NFC. The local transmitter/receiver 812 may also comprise an NFC transmitter for transmitting data from the smartphone 802 to the ATM 804 or other suitable local device.

In some embodiments, the smartphone 802 has an NFC controller chip, which includes both an NFC transmitter and an NFC receiver. The NFC controller chip is configured to adhere to at least the ISO 14443 standards, and the relevant EMV or ATM application standards. The smartphone 802 further comprises a processor 814, a memory device 816, and a camera 818. The camera 818 may be used to provide biometric authentication of the cardholder.

### SOFTWARE ARCHITECTURE OF MOBILE COMPUTING DEVICE

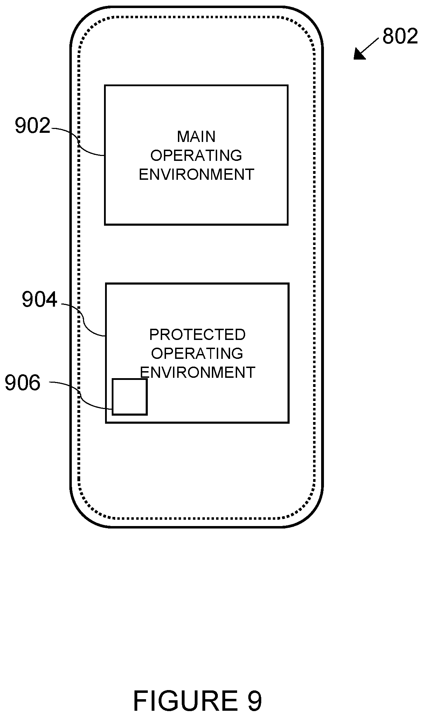

Figure 9 shows the software architecture of the smartphone 802 shown in Figure 8. The software architecture has a main operating environment 902 and a protected operating environment 904.

The main operating environment 902 may be used with a generic operating system such as iOS or Android. The main operating environment 902 comprises a mobile service application. The main operating environment 902 also comprises other applications that are normally needed by such a mobile computing device, such as a browser, a modem and a camera driver (not shown).

The protected operating environment 904 may be a Subscriber Identity Module SIM, Universal Integrated Circuit Card UICC, a Secure Element or a hardware backed Trusted Execution Environment. Alternatively, there may be a sandbox or other logically protected environment in the main operating environment to provide a secure environment. This may involve using one or more external resources to provide a secure environment.

The protected operating environment 904 may comprise a mobile banking application 906 or `app' for making payments or withdrawing cash at an ATM. The mobile banking application 906 can be accessed by a user of the smartphone 802. Alternatively, the elements relevant to the security of the mobile banking application 906 may be comprised in the protected operating environment. The mobile banking application 906 may be located within the SIM or within another physically or logically protected environment. Alternatively, some parts of the mobile banking application 906 may be situated in the protected operating environment. Further, data from the mobile banking application 902 may be located in a protected memory.

### FOUR-PARTY TRANSACTION MODEL

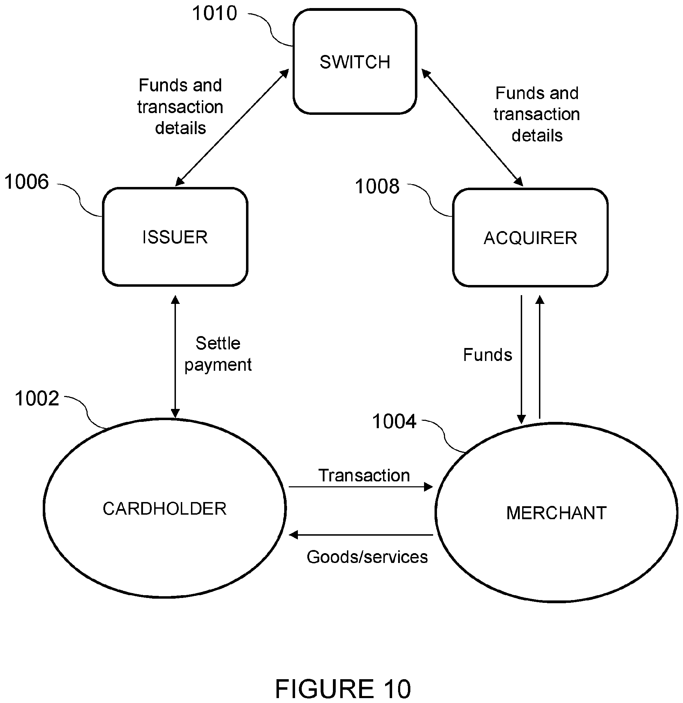

A typical four-party model used in payment interactions between entities operating in a card scheme is shown in Figure 10.

Normally, card schemes - payment networks linked to payment cards - are based on one of two models: a three-party model or a four-party model (adopted by Mastercard and others). For the purposes of this document, the four-party model is described in further detail below.

The four-party model may be used as a basis for the transaction network. For each transaction, the model comprises four entity types: cardholder 1002, merchant 1004, issuer 1006 and acquirer 1008. In this model, the cardholder 1002 purchases goods or services from the merchant 1004. The issuer 1006 is the bank or any other financial institution that issued the card to the cardholder 1002. The acquirer 1008 provides services for card processing to the merchant 1004.

The model also comprises a central switch 1010 - interactions between the issuer 1006 and the acquirer 1008 are routed via the switch 1010. The switch 1010 enables a merchant 1004 associated with one particular bank (acquirer 1008) to accept payment transactions from a cardholder 1002 associated with a different bank (issuer 1006).

A typical transaction between the entities in the four-party model can be divided into three main stages: authorisation, clearing and settlement. The cardholder 1002 initiates a purchase of goods or services from the merchant 1004 using their payment card or other transaction device. Details of the card and the transaction are sent to the issuer 1006 via the acquirer 1008 and the switch 1010 to authorise the transaction. Should the transaction be considered abnormal by the issuer 1006, the cardholder 1002 may be required to undergo a verification process to verify their identity and the details of the transaction. Once the verification process is complete the transaction is authorised.

On completion of the transaction between the cardholder 1002 and the merchant 1004, the transaction details are submitted by the merchant 1004 to the acquirer 1008 for clearing and settlement. Clearing is the process by which merchants 1004 and their acquirers 1008 submit the definitive list of transactions performed. Settlement is the final transfer of funds between parties. Clearing and settlement processes are typically determined by the network 1010.

Separately, the issuer 1006 and the cardholder 1002 settle the payment amount between them. A service fee is paid to the acquirer 1008 by the merchant 1004 for each transaction, and an interchange fee is paid to the issuer 1006 by the acquirer 1008 in return for the settlement of funds.

In summary, for a typical transaction, the four-party model comprises four entity types: cardholder 1002, merchant 1004, issuer 1006 and acquirer 1008. In this model, the cardholder 1002 purchases goods or services from the merchant 1004. The issuer 1006 is the bank or any other financial institution that issued the card to the cardholder 1002. The acquirer 1008 provides services for card processing to the merchant 1004. In certain transaction types, other arrangements are possible - for example, transactions are possible where the issuer 1006 and the acquirer 1008 are the same entity, in which case no routing of the transaction between the two is required. Furthermore, it is possible to have a four-party model that works using only a single message (where the authorisation, clearing and settlement can all happen at the same time).

Many modifications may be made to the specific embodiments described above without departing from the scope of the invention as defined in the accompanying claims. Features of one embodiment may also be used in other embodiments, either as an addition to such embodiment or as a replacement thereof.

In embodiments, location services may be used to validate the location of the mobile device and the ATM. For example, the digital wallet may include an ATM ID or location information provided by the mobile device or cardholder and restrict ATM usage to ATMs in the vicinity of the cardholder.

In embodiments, as an alternative to NFC, quick response (QR) codes can be used to verify the cardholder's identity. The cardholder signs into the banking application, selects cash withdrawal and then scans the QR code at the ATM. As a further alternative, biometric verification can be used to verify the cardholder's identity. The ATM uses facial recognition or fingerprint recognition to verify the cardholder's identity.

### DEFINITIONS

### APDU:

### Application Protocol Data Unit

A communication unit between a contactless reader and a contactless device.

### ATM:

### Automated Teller Machine

### Banking application:

A mobile software application that enables users to access their bank accounts and perform various transactions from their mobile devices.

### CDA:

Combined dynamic data authentication - a security method used in payment transactions which combines card authentication and transaction approval into a single step.

### CDCVM:

Consumer device cardholder verification method - a security feature that allows a cardholder to authenticate transactions directly on their own mobile device.

### Cirrus:

ATM-only brand by Mastercard. An alternative is Mastercard Debit.

### Contactless kernel:

Software which provides a set of functions for payment acceptance devices (such as point-of-sale terminals and ATMs) to process contactless transactions.

### Digital-first banking:

An approach to financial services that prioritises digital channels and technologies as the primary means of customer interaction and service delivery, focussing on providing a seamless, convenient, and personalised banking experience through digital platforms.

### Digital-only banking:

Financial institutions that operate exclusively online without any physical branches. These banks provide a range of banking services through digital platforms, primarily via mobile apps and websites.

### Digital wallet:

A software-based system that allows users to store payment information and make transactions using mobile devices.

### DPAN:

Device primary account number - a unique tokenised alias that is associated with the FPAN and assigned to the payment card.

### FPAN:

Financial primary account number - an actual 16-digit card number associated with a payment account.

### MDES:

Mastercard Digital Enablement Services - a tokenization platform offered by Mastercard that enhances the security of digital payments. MDES contains a token vault which performs tokenization mapping to detokenize the DPAN to reveal the FPAN, and to retokenize the FPAN to form the DPAN.

### ODA:

Offline Data Authentication - in payment transactions allows card and terminal to authenticate offline when real-time online connectivity to the issuer is not available. The card signs dynamic data using its own RSA private key, and the terminal verifies this signature to authenticate the card as legitimate.

## Claims

1. A mobile computing device for enabling a user to withdraw cash at a cash withdrawal device, the mobile computing device comprising:
user input means for enabling the user to provide user input to the mobile computing device;
a digital wallet comprising a tokenised payment application and an additional data extension;
wherein the digital wallet is configured to generate a cash withdrawal request comprising cash withdrawal data based on the user input;
wherein the tokenised payment application is configured to communicate with the cash withdrawal device to authenticate the cash withdrawal request; and
wherein the additional data extension is configured to send the cash withdrawal data to the cash withdrawal device;
wherein an issuer authorisation request can be generated for approval by an issuer associated with the user based on the cash withdrawal request, and
wherein the cash withdrawal device is instructed to dispense cash based on approval of the issuer authorisation request.

2. The mobile computing device of Claim 1, wherein the additional data extension is configured to send the cash withdrawal data to an additional data kernel extension at the cash withdrawal device.

3. The mobile computing device of Claim 1 or Claim 2, wherein the tokenised payment application is configured to communicate with a contactless kernel at the cash withdrawal device to authenticate the cash withdrawal request.

4. The mobile computing device of Claim 3, wherein the tokenised payment application, in communication with the contactless kernel at the cash withdrawal device, is configured to perform authentication of the cash withdrawal request to verify the identity of the user and to validate the mobile computing device.

5. The mobile computing device of any previous claim, wherein the cash withdrawal data comprises issuer approval of the issuer authorisation request.

6. The mobile computing device of Claim 5, wherein the issuer authorisation request comprises a timestamp, and a tokenised issuer approval response can be generated including the timestamp based on approval of the issuer authorisation request.

7. The mobile computing device of Claim 6, wherein the digital wallet is configured to store an issuer approval in a secure location, and wherein the issuer approval comprises the tokenised issuer approval response.

8. A cash withdrawal device for enabling a user to withdraw cash using a mobile computing device, the computing device comprising:
a cash withdrawal device reader, wherein the cash withdrawal device reader comprises:
a contactless kernel configured to communicate with a tokenised payment application in a digital wallet of the mobile computing device to authenticate a cash withdrawal request comprising cash withdrawal data and to generate transaction data;
an additional data kernel extension configured to communicate with an additional data extension in the digital wallet to receive the cash withdrawal data;
a cash withdrawal device processor for communicating with an acquirer associated with the computing device;
wherein an issuer authorisation request can be generated for approval by an issuer associated with the user based on the cash withdrawal request, and
wherein the cash withdrawal device is instructed to dispense cash based on approval of the issuer authorisation request.

9. The computing device of Claim 8, wherein the cash withdrawal device processor is configured to generate the issuer authorisation request based on the cash withdrawal data and the transaction data.

10. The computing device of Claim 9, wherein the cash withdrawal device processor is configured to collate the cash withdrawal data and the transaction data to generate the issuer authorisation request.

11. The computing device of Claim 9 or Claim 10, wherein the cash withdrawal device processor is configured to send the issuer authorisation request to the issuer via the acquirer and a payment network.

12. The computing device of Claim 9 or Claim 10, wherein the cash withdrawal device processor is configured to send the issuer authorisation request to the issuer via the acquirer.

13. The computing device of Claim 8, wherein the cash withdrawal data comprises issuer approval of the issuer authorisation request.

14. The computing device of Claim 13, wherein the issuer approval comprises a tokenised issuer approval response.

15. The computing device of Claim 14, wherein the additional data kernel extension is configured to receive and validate the tokenised issuer approval response.
